(19)

Europäisches Patentamt

European Patent Office

Office européen des brevets

(11) **EP 4 530 959 A1**

(12) **EUROPEAN PATENT APPLICATION**

(43) Date of publication:
02.04.2025 Bulletin 2025/14

(21) Application number: 24162282.8

(22) Date of filing: 08.03.2024

(51) International Patent Classification (IPC):
G06Q 30/0601 (2023.01)      G06N 3/045 (2023.01)
G06T 11/00 (2006.01)      G06F 40/20 (2020.01)

(52) Cooperative Patent Classification (CPC):
G06Q 30/0643; G06F 40/20; G06F 40/30;
G06N 3/045; G06N 3/047; G06T 11/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 28.09.2023 IN 202311065195

(71) Applicant: Sterlite Technologies Limited
Gurugram, Haryana 122102 (IN)

(72) Inventors:
• Mahapatra, Spandan
Marietta (US)

• Ramaiah, Sridhara
Milford (US)
• Barnwal, Satyam
Gurugram (IN)
• Susreetha, Damegunta Lakshmi
Gurugram (IN)
• Navuluri, Sainath
Gurugram (IN)
• Singh, Piyush Kumar
Gurugram (IN)

(74) Representative: Valet Patent Services Limited
c/o Caya 83713X
Am Börstig 5
96052 Bamberg (DE)

(54) **SYSTEM AND METHOD FOR VIRTUAL INTERACTION WITH OUTDOOR IMAGERY**

(57) The present disclosure relates to a method (200) for transforming a visual comprises steps of integrating, by way of processing circuitry (120) of an information processing apparatus (106), product data within a context of one or more scenarios to form a modified visual. In particular, the integration is based on human feedback-loop interactions. Moreover, the integration includes utilizing generative Artificial Intelligence (AI) techniques to generate one or more scenarios, fusing product data within generated synthetic scenarios to form modified visual; facilitating virtual interaction with modified visual, and fine-tuning the modified visual using generative AI techniques.

Fig. 2A

EP 4 530 959 A1

## Description

## TECHNICAL FIELD

Embodiments of the present disclosure relate to the field of computer vision and artificial intelligence systems, and more particularly, relates to systems and methods for virtual interaction with outdoor imagery.

This application claims the benefit of Indian Application No. 202311065195 titled "SYSTEM AND METHOD FOR VIRTUAL INTERACTION WITH OUTDOOR IMAGERY" filed by the applicant on 28 Sep 2023, which is incorporated herein by reference in its entirety.

## Background Art

Virtual interaction with an accurate, generated virtual model of an indoor space is a desirable goal, as such virtual interactions can be useful in a variety of applications, including retail experiences, e-commerce, real estate visualization, architecture and modeling, education, entertainment, and more. An example can serve to demonstrate the current problems with e-commerce in interior décor, and how such a virtual interaction can resolve many issues.

Customers shopping for outdoor products, whether in physical stores or online, often face challenges envisioning these items in their own spaces. Determining whether a product complements their garden, fits appropriately, and matches the existing décor can be tricky. US Patent US11170569 outlines a system and method for creating virtual 3D models of indoor scenes from 2D images, facilitating modeling of indoor spaces, furniture, and objects. Another US patent US11367250 outlines a method for creating and interacting with virtual 3D indoor room models. It involves capturing indoor imagery, generating a virtual 3D model, providing a user interface, and enabling user interaction with the model through that interface.

Some of the existing industry solutions offer reimagined scenarios based on textual prompts and offer live augmented reality (AR) on devices such as AR-enabled phones. However, these solutions are mainly focused on 3D modelling for experience generation, lacking ability to provide a continuous iteration of the design, interaction with design attributes or real product information. But 3D modelling requires a 3D model of each object in the product catalog which takes a lot of time and effort to create a 3D model of each product in the product catalog.

Further, the existing solutions do not allow for distinct objects, like a lawn and a chair from different images, to be presented as separate elements within a single unified view or scene. Current solutions also lack the ability to continuously refine experiences while evolving designs without discarding previous versions. They do not support iterative fine-tuning based on human or autonomous feedback. Additionally, these solutions often demand substantial technical expertise and can be time-consuming. Mixed reality-based solutions lack automatic image regeneration and attribute-based interaction. They mainly involve changing object placements in a target image.

Accordingly, to overcome the disadvantages of the prior art, there is an urgent need for providing systems and methods to reimagine outdoor experiences by facilitating interactions with attributes and design-related information for a more dynamic approach. Thus, the present disclosure provides systems and methods for virtual interaction with outdoor imagery.

## SUMMARY OF THE DISCLOSURE

Embodiments of the present disclosure relates to a method for transforming a visual comprises step of integrating, by way of processing circuitry of an information processing apparatus. In particular, the product data within a context of one or more scenarios to form a modified visual. Further, the integration is based on human feedback-loop interactions.

According to the first aspect of the present disclosure, the step of integrating of the product data within the context of the one or more scenarios comprises utilizing generative Artificial Intelligence (AI) techniques to generate, by way of processing circuitry, the one or more scenarios, fusing, by way of processing circuitry the product data within the generated one or more synthetic scenarios to form the modified visual; facilitating, by way of processing circuitry a virtual interaction with the modified visual; and fine-tuning, by way of processing circuitry. In particular, the modified visual uses generative AI techniques. Further, the one or more scenarios are one or more synthetic scenarios.

According to the second aspect of the present disclosure, integrating of the product data within the context of the one or more scenarios further comprises importing, by way of processing circuitry the one or more scenarios from a data store, fusing, by way of processing circuitry the product data within the one or more scenarios to form the modified visual, facilitating, by way of processing circuitry a virtual interaction with the modified visual and fine-tuning, by way of processing circuitry the modified visual using generative AI techniques.

According to the third aspect of the present disclosure, the integrating of the product data within the context of the one or more scenarios further comprises processing, by way of processing circuitry an input query, transforming, by way of processing circuitry data of the input query using Variational Autoencoders (VAEs) to enhance a spatial arrangement of the products within the one or more scenarios, fusing, by way of processing circuitry the product data into the context of the one or more scenarios using generative AI techniques to form the modified visual and dynamically integrating, by way of processing circuitry the modified visual with real-time product data using generative AI techniques.

According to the fourth aspect of the present disclosure, the input query comprising one of, a text, the one or more scenarios, product data from one or more product catalogs, unstructured social media and web content, user-generated input using neural network architectures, or a combination thereof.

According to the fifth aspect of the present disclosure, the method includes iteratively fine-tuning, by way of processing circuitry at least a portion of the visual by altering at least a part of one of, the one or more products, the one or more synthetic scenarios, or a combination thereof.

According to the sixth aspect of the present disclosure, the method includes enabling, by way of processing circuitry, a user to engage in a virtual interaction with the modified visual.

According to the seventh aspect of the present disclosure, the method includes dynamically integrating by way of processing circuitry the visual with real-time product data.

According to the eighth aspect of the present disclosure, the method includes automated and iteratively refining, by way of processing circuitry the modified visual based on generative AI techniques and/or collecting the one or more scenarios using one or more sensors.

According to the ninth aspect of the present disclosure, the method generates an output image (*i.e.,* the modified visual) by combining the scenario data and the combined image using the pinpointed coordinates used to generate the masked inpainted image. The combined image is generated using the masked inpainted image with the product image with background removed.

According to the tenth aspect of the present disclosure, the method includes The method further comprising: generating masked inpainted images using one or more pinpointed coordinates integrating the text of the input query, the one or more scenarios, and the product data; and generating a product image with background removed.

The foregoing objectives of the present disclosure are attained by providing systems and methods for virtual interaction with outdoor imagery.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a block diagram illustrating a system for iterative fine tuning of designing an experience with multi modal input interactions in accordance with an embodiment of the present disclosure;

Fig. 2A is a block diagram illustrating an information processing apparatus in accordance with an embodiment of the present disclosure;

Fig. 2B is a flowchart illustrating a method of iterative fine tuning for designing an experience with multi modal input interaction in accordance with one embodiment of the present disclosure;

Fig. 2C is a flowchart illustrating a method of iterative fine tuning for designing an experience with multi modal input interaction in accordance with another embodiment of the present disclosure;

Fig. 3 is a flowchart illustrating a method utilizing a combination of Generative Adversarial Network (GAN) and Reinforcement learning AI technique to continuously make the output design image realistic in accordance with an embodiment of the present disclosure;

Fig. 4 is a flowchart illustrating a method for data preparation and vector embedding generation in accordance with an embodiment of the present disclosure;

Fig. 5 is a flowchart illustrating a method for creating a vector index with a matching engine in accordance with an embodiment of the present disclosure;

Fig. 6 is a flowchart illustrating a method for recommending products based on text input in accordance with an embodiment of the present disclosure.

The information processing apparatus is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

**DESCRIPTION OF EMBODIMENTS**

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
The term "The Vector Database" serves as a repository storing high-dimensional vector embeddings that encapsulate the semantic features of products in the catalogue. These embeddings enable efficient cross-modal comparisons and retrieval, forming the basis for accurate product recommendations. Vector database is to provide a superior solution for handling vector embeddings by addressing the limitations of standalone vector indices, such as scalability challenges, cumbersome integration processes, and the absence of real-time updates and built-in security measures, ensuring a more effective and streamlined data management experience. In our use case, the Vector Database encapsulates the essence of each product, combining text and image information. This unified representation enables effective retrieval of semantically similar products, supporting the recommendation engine's accuracy and relevance.

The term "Vector embeddings" are multi-dimensional numerical representations that capture semantic relationships and the content of data points. In our context, these embeddings encode both text and image information, enabling seamless comparisons and retrieval across modalities. Vector embeddings are a way of representing data in a multi-dimensional space. They are used in machine learning and data science to represent data in a way that is easier to analyze. Vector embeddings are used in recommendation systems because they can quickly find similar objects for a given query.

The term "Matching Engine" is an efficient search mechanism that exploits Approximate Nearest Neighbors (ANN) algorithms. It indexes vector embeddings in the Vector Database, allowing rapid identification of products with high similarity to a given query. A matching engine is a software component that matches incoming data against a set of predefined rules or criteria. It is used in many applications such as fraud detection, recommendation systems, and search engines.

The term "Approximate Nearest Neighbors (ANN)" is a search algorithm designed for efficient retrieval of data points with similar characteristics from a large dataset. It employs techniques like space partitioning (e.g., trees) and hashing to organize data in a way that minimizes the search space. By sacrificing absolute accuracy for speed, ANN quickly identifies a subset of potential neighbors that are likely to be close in distance to the query point. This makes ANN well-suited for high-dimensional spaces where exhaustive search becomes impractical. The algorithm is commonly used in recommendation systems, image retrieval, and other applications that demand fast similarity-based searches.

The term "Multimodal Embedding" is a machine-learning technique that projects diverse data modalities, such as text and images, into a shared semantic space. This enables efficient comparison and retrieval across modalities, creating a unified representation where similar inputs are close and dissimilar ones are distant. These embeddings allow for seamless interchangeability between modalities, enabling tasks like image search, content recommendation, and more. Utilizing APIs, users input text or images, receiving high-dimensional embeddings that capture semantic content and relationships. This technique enhances the performance of various applications that involve heterogeneous data analysis.

The term "Model Functionality" is a multimodal embedding model combines text (name) and image (image) inputs, generating a specific-dimensional embedding vector representing the product's semantic content. This vector is used for indexing and retrieval in the matching engine, allowing for efficient recommendations based on text inputs.

Terms inpaint and unpaint are used interchangeably throughout the specification for convenience.

The System and Method's intelligent recommendation engine utilizes machine learning to suggest design themes and products that align perfectly with the user's vision. Users can unleash their creative prowess as they effortlessly blend the real and virtual worlds, designing mesmerizing scenes that captivate and inspire. Further, the users can edit, compare, and save experiences to optimize results and drive informed decisions.

The system and method of the present disclosure provides:

- CX (Consumer Experience) App on mobile Devices
- Generative Models
- Provide users with immersive and interactive experiences, Personalized recommendations.
- Personalized shopping experience, User-friendly interface, Create wish lists.
- Create experiences, save experiences, browse experiences and browse related products, choose products, and see the impact on budget in Real-time.
- Enable users to visualize outdoor products in their actual spaces.

The system and method of the present disclosure allows users to assess how the items would fit and match their existing environment, helping with purchasing decisions. Allowing users to interact with virtual objects in their surroundings as captured by the camera in Real-time. Further, generating modified images based on textual prompts using a custom implementation of the "text to image generation models such as InstructPix2Pix, Stable Diffusion.

The model pipeline involves these key steps:

- Essential libraries and packages are imported to enable the functionality required for image manipulation and processing. The pipeline itself is designed to take advantage of the Test to image generation model, which excels at generating images based on textual instructions.
- The custom pipeline is initialized with crucial components such as a Variational Autoencoder (VAE), tokenizer, text encoder, UNet, scheduler, and an image processor. These components work together harmoniously to facilitate the image modification process.
- Textual prompts are processed to obtain embeddings through tokenization and encoding. These text embeddings act as guides for generating modified images in line with the provided instructions.
- Image latent representations are extracted from the input image. These latent representations serve as references, aiding in the manipulation of the image to align with the desired modifications.

The core of the pipeline involves a denoising process. Latent representations undergo iterative denoising over multiple time steps. Noise is gradually introduced and then removed, effectively modifying the image while adhering to the input instructions and reference latent representations. Once the denoising process is complete and the latent representations are refined, they are utilized to generate the final modified image. By employing the decoding process of the VAE, latent representations are transformed back into the image space. Further, the system and methods of the present disclosure demonstrates how a custom pipeline, composed of carefully coordinated components, can seamlessly integrate text processing, latent manipulation, and image generation to yield modified images that adhere to textual prompts. This process showcases the capacity of machine learning models to be adapted and tailored to specific tasks, offering a coherent framework for creating meaningful image modifications based on provided instructions.

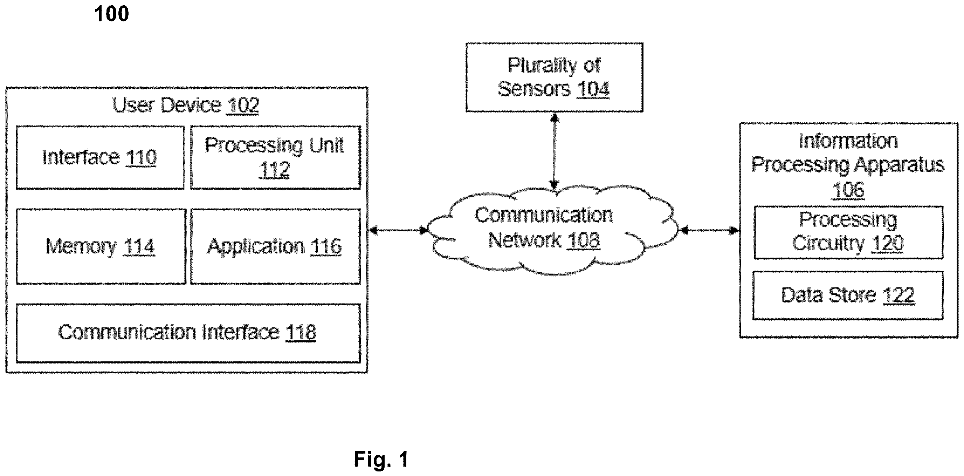

Fig. 1 is a block diagram illustrating a system for iterative fine tuning of designing an experience with multi modal input interactions in accordance with an embodiment of the present disclosure. The system 100 may be configured to facilitate in reimagining and continuously fine-tuning outdoor experiences. Further, the system 100 may be configured to integrate new scenarios with product data through autonomous processes and human feedback-loop interactions, making virtual interactions with outdoor imagery possible for a user. Furthermore, the system 100 may be configured to rely on an input mechanism, incorporating elements such as an outdoor image, a product data store, and user-generated input such that the inputs undergo computational processes, culminating in intricate spatial arrangement of the products within the context of the outdoor image.

In accordance with an embodiment of the present disclosure, the system 100 may include a user device 102, a plurality of sensors 104, and an information processing apparatus 106. In particular, the user device 102, the plurality of sensors 104, and the information processing apparatus 106 may be configured to communicate with each other and other entities within the system 100 by way of a communication network 108 and/or through separate communication networks established therebetween.

The communication network 108 may include suitable logic, circuitry, and interfaces that are configured to provide a plurality of network ports and a plurality of communication channels for transmission and reception of data related to operations of various entities in the system 100. Each network port may correspond to a virtual address (or a physical machine address) for transmission and reception of the communication data. In an example, the virtual address may be an Internet Protocol Version 4 (IPV4) (or an IPV6 address) and the physical address may be a Media Access Control (MAC) address. In particular, the communication network 108 may be associated with an application layer for implementation of communication protocols based on one or more communication requests from the user device 102, the plurality of sensors 104, and the information processing apparatus 106. Moreover, the communication data may be transmitted or received, via the communication protocols.

Further, the communication protocols may include, but are not limited to, Hypertext Transfer Protocol (HTTP), File Transfer Protocol (FTP), Simple Mail Transfer Protocol (SMTP), Domain Network System (DNS) protocol, Common Management Interface Protocol (CMIP), Transmission Control Protocol and Internet Protocol (TCP/IP), User Datagram Protocol (UDP), Long Term Evolution (LTE) communication protocols, or any combination thereof.

In an embodiment of the present disclosure, the communication data may be transmitted or received via at least one communication channel of a plurality of communication channels in the communication network 108. In particular, the communication channels may include, but are not limited to, a wireless channel, a wired channel, a combination of wireless and wired channel thereof. The wireless or wired channel may be associated with a data standard which may be defined by one of a Local Area Network (LAN), a Personal Area Network (PAN), a Wireless Local Area Network (WLAN), a Wireless Sensor Network (WSN), Wireless Area Network (WAN), Wireless Wide Area Network (WWAN), a Metropolitan Area Network (MAN), a Satellite Network, the Internet, a Fiber Optic Network, a Coaxial Cable Network, an Infrared (IR) network, a Radio Frequency (RF) network, and a combination thereof. Embodiments of the present disclosure are intended to include or otherwise cover any type of communication channel, including known, related art, and/or later developed technologies.

In accordance with an embodiment of the present disclosure, the processing unit 112 may include suitable logic, instructions, circuitry, and/or interfaces for executing various operations, such as one or more operations associated with the user device 102. In particular, the processing unit 112 may be configured to control the one or more operations executed by the user device 102 in response to an input received at the user device 102 from the user. The processing unit 112 may include, but are not limited to, an Application-Specific Integrated Circuit (ASIC) processor, a Reduced Instruction Set Computing (RISC) processor, a Complex Instruction Set Computing (CISC) processor, a Field-Programmable Gate Array (FPGA), a Programmable Logic Control unit (PLC), and the like. Aspects of the present disclosure are intended to include or otherwise cover any type of the processing unit 112 including known, related art, and/or later developed technologies.

The memory 114 may be configured to store logic, instructions, circuitry, interfaces, and/or codes of the processing unit 112, data associated with the user device 102, and data associated with the system 100. The memory 114 may include, but are not limited to, a Read Only Memory (ROM), a Random Access Memory (RAM), a Flash Memory (FM), a Removable Storage Drive (RSD), a Hard Disk Drive (HDD), a Solid-State Memory (SSM), a Magnetic Storage Drive (MSD), a Programmable Read Only Memory (PROM), an Erasable PROM (EPROM), and/or an Electrically EPROM (EEPROM). Aspects of the present disclosure are intended to include or otherwise cover any type of the memory 114 including known, related art, and/or later developed technologies.

In accordance with an embodiment of the present disclosure, the user device 102 may be adapted to facilitate a user to input data, receive data, and/or transmit data within the system 100. The user device 102 may be, but is not limited to, a desktop, a notebook, a laptop, a handheld computer, a touch sensitive device, a computing device, a smart phone, a smart watch, and the like. It will be apparent to a person of ordinary skill in the art that the user device 102 may be any device/apparatus that is capable of manipulation by the user, without deviating from the scope of the present disclosure.

In accordance with an embodiment of the present disclosure, the system 100 includes a single user device (i.e., the user device 102). In various alternative aspects, the system 100 may include multiple user devices without deviating from the scope of the present disclosure. In such a scenario, each user device is configured to perform one or more operations in a manner similar to the operations of the user device 102 as described herein. Further, the user device 102 may have an interface 110, a processing unit 112, and a memory 114.

In accordance with an embodiment of the present disclosure, the interface 110 may include an input interface for receiving inputs from the first user. In particular, the input interface may include, but are not limited to, a touch interface, a mouse, a keyboard, a motion recognition unit, a gesture recognition unit, a voice recognition unit, or the like. Aspects of the present disclosure are intended to include or otherwise cover any type of the input interface including known, related art, and/or later developed technologies.

Further, the interface 110 may include an output interface for displaying (or presenting) an output to the customer. The output interface may include, but are not limited to, a display device, a printer, a projection device, and/or a speaker.

In accordance with various embodiments of the present disclosure, the interface 110 may include, but are not limited to, a digital display, an analog display, a touch screen display, a graphical customer interface, a website, a web page, a keyboard, a mouse, a light pen, an appearance of a desktop, and/or illuminated characters.

In accordance with an embodiment of the present disclosure, the user device 102 may further have one or more computer executable applications configured to be executed by the processing unit 112. The one or more computer executable applications may have suitable logic, instructions, and/or codes for executing various operations associated with the system 100. The one or more computer executable applications may be stored in the memory 114. The one or more computer executable applications may be, but are not limited to, an audio application, a video application, a social media application, a navigation application, and the like. In particular, the one or more computer executable applications may include an application 116. Moreover, one or more operations associated with the application 116 may be controlled by the information processing apparatus 106.

The user device 102 may further have a communication interface 118 configured to enable the user device 102 to communicate with the information processing apparatus 106 and other components of the system 100 over the communication network 108. Examples of the communication interface 118 may be, but are not limited to, a modem, a network interface such as an Ethernet Card, a communication port, and/or a Personal Computer Memory Card International Association (PCMCIA) slot and card, an antenna, a Radio Frequency (RF) transceiver, one or more amplifiers, a tuner, one or more oscillators, a digital signal processor, a Coder Decoder (CODEC) Chipset, a Subscriber Identity Module (SIM) card, and a local buffer circuit. It will be apparent to a person of ordinary skill in the art that the first communication interface 118 may include any device and/or apparatus capable of providing wireless and/or wired communications between the user device 102 and other components of the system 100 over the communication network 108.

In accordance with an embodiment of the present disclosure, the plurality of sensors 104 may be installed in a vicinity where the user is positioned to experience a scenario environment. In particular, the plurality of sensors 104 may be configured to sense signals that represent one or more parameters associated with an environment of the user. Alternative embodiments include and/or cover any type of the parameters associated with the user that may facilitate efficient monitoring of the environment of the user, without deviating from the scope of the present disclosure. Moreover, the plurality of sensors 104 may be, but is not limited to, a proximity sensor, an Ultrasonic sensor, an imaging sensor, and the like. Aspects of the present disclosure are intended to include and/or otherwise cover any type of the plurality of sensors 104, including known, related, and later developed sensors, without deviating from the scope of the present disclosure.

In accordance with an embodiment of the present disclosure, the information processing apparatus 106 may be a network of computers, a framework, or a combination thereof, that may provide a generalized approach to create a server implementation. In particular, the information processing apparatus 106 may have, but is not limited to, personal computers, laptops, mini-computers, mainframe computers, any non-transient and tangible machine that can execute a machine-readable code, cloud-based servers, distributed server networks, or a network of computer systems. Moreover, the information processing apparatus 106 may be realized through various web-based technologies such as, but not limited to, a Java web-framework, a .NET framework, a personal home page (PHP) framework, or any other web-application framework. Further, the information processing apparatus 106 may include one or more processing circuitries of which processing circuitry 120 is shown and a data store 122.

The processing circuitry 120 may be configured to execute various operations associated with the system 100. Moreover, the processing circuitry 120 may be configured to host and enable the application 116 running on (and/or installed on) the user devices 102 to execute one or more operations associated with the system 100 by communicating one or more commands and/or instructions over the communication network 108. In particular, the processing circuitry 120 may be, but are not limited to, an ASIC processor, a RISC processor, a CISC processor, a FPGA, and the like. Aspects of the present disclosure are intended to include and/or otherwise cover any type of the processing circuitry 120 including known, related art, and/or later developed technologies.

The data store 122 may be configured to store the logic, instructions, circuitry, interfaces, and/or codes of the processing circuitry 120 for executing various operations. Further, the data store 122 may be configured to store therein, data associated with the users registered with the system 100, and the like. In some aspects of the present disclosure, the data store 122 may be configured to receive and/or access unstructured data from the internet (such as shopping websites, social media websites, and the like). It will be apparent to a person having ordinary skill in the art that the data store 122 may be configured to store various types of data associated with the system 100, without deviating from the scope of the present disclosure.

The data store 122 may include but are not limited to, a Relational database, a NoSQL database, a Cloud database, an Object-oriented database, and the like. Further, the data store 122 may include associated memories that may be, but is not limited to, a ROM, a RAM, a flash memory, a removable storage drive, a HDD, a solid-state memory, a magnetic storage drive, a PROM, an EPROM, and/or an EEPROM. Aspects of the present disclosure are intended to include or otherwise cover any type of the data store 122 including known, related art, and/or later developed technologies.

In alternative embodiments of the present disclosure, a set of centralized or distributed networks of peripheral memory devices may be interfaced with the information processing apparatus 106, as an example, on a cloud server.

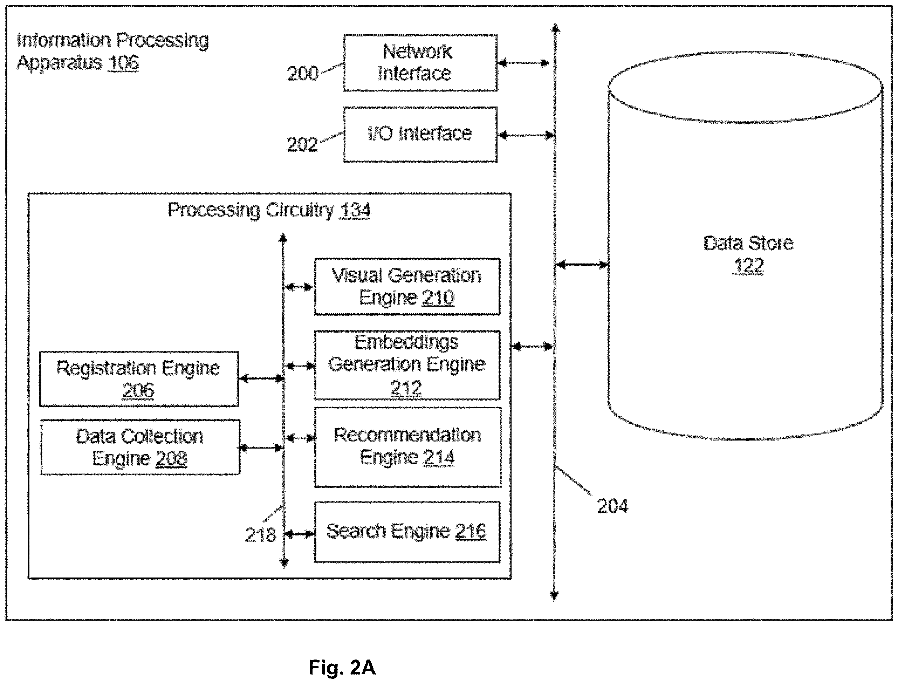

Fig. 2A is a block diagram illustrating an information processing apparatus in accordance with an embodiment of the present disclosure. In particular, the information processing apparatus 106 has the processing circuitry 120 and the data store 122, a network interface 200 and an input/output (I/O) interface 202. The processing circuitry 120, the data store 122, the network interface 200, and the I/O interface 202 may communicate with each other by way of a first communication bus 204.

In accordance with an embodiment of the present disclosure, the processing circuitry 120 may have a registration engine 206, a data collection engine 208, a visual generation engine 210, an embeddings generation engine 212, a recommendation engine 214, and a search engine 216. In particular, the registration engine 206, the data collection engine 208, the visual generation engine 210, the embeddings generation engine 212, the recommendation engine 214, and the search engine 216 may communicate with each other by way of a second communication bus 218. It will be apparent to a person having ordinary skill in the art that the information processing apparatus 106 is for illustrative purposes and not limited to any specific combination of hardware circuitry and/or software.

In accordance with an embodiment of the present disclosure, the network interface 200 may have suitable logic, circuitry, and interfaces configured to establish and enable a communication between the information processing apparatus 106 and different components of the system 100, via the communication network 108. In particular, the network interface 200 may be implemented by use of various known technologies to support wired or wireless communication of the information processing apparatus 106 with the communication network 108. Moreover, the network interface 200 may be, but is not limited to, an antenna, a RF transceiver, one or more amplifiers, a tuner, one or more oscillators, a digital signal processor, a CODEC chipset, a SIM card, and a local buffer circuit.

In accordance with an embodiment of the present disclosure, the I/O interface 202 may have suitable logic, circuitry, interfaces, and/or code that may be configured to receive inputs and transmit server outputs (*i.e.,* one or more outputs generated by the information processing apparatus 106) via a plurality of data ports in the information processing apparatus 106. In particular, the I/O interface 202 may have various input and output data ports for different I/O devices. Further, I/O devices may be, but are not limited to, a touch screen, a keyboard, a mouse, a joystick, a projector audio output, a microphone, an image-capture device, a liquid crystal display (LCD) screen and/or a speaker.

In accordance with an embodiment of the present disclosure, the processing circuitry 120 may be configured to execute various operations associated with the system 100. In particular, the processing circuitry 120 may be configured to execute the one or more operations associated with the system 100 by communicating one or more commands and/or instructions over the communication network 108 to the user device 102, the plurality of sensors 104, and other entities in the system 100. Moreover, the processing circuitry 120 may be configured to perform one or more operations associated with the system 100 by way of the registration engine 206, the data collection engine 208, the visual generation engine 210, the embeddings generation engine 212, the recommendation engine 214, and the search engine 216.

In accordance with an embodiment of the present disclosure, the registration engine 206 may be configured to enable a user to register into the system 100 by providing registration data through a registration menu (not shown) of the application 116 displayed through the user device 102. The registration data may be, but is not limited to, a name, a demographics, a contact number, an address, and the like. Aspects of the present disclosure are intended to include or otherwise cover any type of the registration data. In particular, the registration engine 206 may be further configured to enable the user to create a login identifier and a password to enable the user to subsequently login into the system 100. Further, the registration engine 206 may be configured to store the registration data associated with the user, the login and the password associated with the user in a LookUp Table (LUT) (not shown) provided in the data store 122.

In accordance with an embodiment of the present disclosure, the data collection engine 208 may be configured to receive an input query from the user by way of the application 116 installed on the user device 102. In particular the input query may have, but not limited to, one or more scenarios, an image, product data (from one or more product catalog or unstructured social media and web content), a text (e.g., "decorate my backyard with chairs for relaxing"), and the like. Moreover, the text may be provided in a free flow language. Further, the data collection engine 208 may be configured to receive the sensed signals from the plurality of sensors 104.

In accordance with an embodiment of the present disclosure, the visual generation engine 210 may be configured to transform a visual by integrating the product data within a context of one or more scenarios to form an output visual and/or image (having modified visuals). In particular, the visual generation engine 210 may be configured to generate one or more scenarios by using a generative Artificial Intelligence (AI) technique. Moreover, the visual generation engine 210 may be configured to generate one or more synthetic scenarios (i.e., the one or more scenarios) by using the generative Artificial Intelligence (AI) technique. Further, the visual generation engine 210 may be configured to generate the one or more synthetic scenarios based on the sensed signals received from the plurality of sensors 104. Furthermore, the visual generation engine 210 may be configured to import the one or more scenarios from a list of scenarios stored in the data store 122 based on the input query. Subsequently, the visual generation engine 210 may be configured to process the input query using one or more neural network architectures.

In accordance with an embodiment of the present disclosure, the visual generation engine 210 may be configured to generate a visual based on the input query provided by the user (*i.e.,* the one or more scenarios, the image, the product data, the text). In particular, the visual generation engine 210 may be configured to transform the inputs received via the input query using Variational Autoencoders (VAEs) to enhance a spatial arrangement of one or more products within the one or more scenarios. Moreover, to enhance a spatial arrangement of one or more products within the one or more scenarios using the Variational Autoencoders (VAEs), the visual generation engine 210 generates the visual. Further, to generate the visual based on the text and the image, the visual generation engine 210 modifies the image received via the input query in accordance with the text input to generate the visual with a recommended product (provided by way of the recommendation engine 214) such that the recommended product is added to the image based on the text to generate the modified visual using generative neural networks while considering the one or more scenarios.

In some aspects of the present disclosure, the generative neural networks may be, but is not limited to GAN (Generative Adversarial Networks). In particular, the recommended image may be provided by AI automatically in terms of color, size and numbers.

In an exemplary example, when the text input is "input chair in garden", the visual generation engine 210 in communication with the recommendation engine 214 may recommend images with varying number of products (*i.e.,* chair) depending on a size of the garden using the generative AI technique.

Further, the visual generation engine 210 may be configured to detect one or more products in the generated visual. Furthermore, the visual generation engine 210 detects one or more products in the generated visual and utilize an object detection model such as, but not limited to, YOLO, SSD, RetinaNet, and the like. Aspects of the present disclosure are intended to include and/or otherwise cover any type of the object detection model that may be capable of detecting one or more products from the generated visual, known to a person having ordinary sill in the art, without deviating from the scope of the present disclosure.

The visual generation engine 210 may be configured to extract and save one or more coordinates of the one or more products from the visual. In particular, the visual generation engine 210 may be configured to generate masked inpainted images using the pinpointed coordinates integrating the text, the one or more scenarios, and the product data of the input query. Moreover, the visual generation engine 210 may be configured to generate a masked visual based on the extracted coordinates of the one or more products. Further, the visual generation engine 210 may be configured to remove any generic product from the generated visual by utilizing inpainting to generate an inpainted visual. Furthermore, the visual generation engine 210 may be configured to crop required areas using the one or more extracted coordinates.

In accordance with an embodiment of the present disclosure, the visual generation engine 210 may be configured to pass one or more API calls to one or more data sources to retrieve data (specifically one or more images of one or more products that match with the product data provided by the user). The one or more data sources may be, but not limited to, a product catalog, product searches, social media searches, and the like. Aspects of the present disclosure are intended to include and/or otherwise cover any type of the one or more data sources, without deviating from the scope of the present disclosure.

In accordance with an embodiment of the present disclosure, the visual generation engine 210 may be further configured to generate a product image with background removed. Particularly, the visual generation engine 210 may be configured to remove background from the data (specifically one or more images of one or more products that matches with the product data provided by the user) by way of one or more background removal tools. Moreover, the one or more background removal tools may be, but not limited to, REMBG, GIMP, remove background, ai-background-remove, and the like. Aspects of the present disclosure are intended to include and/or otherwise cover any type of the one or more background removal tools, without deviating from the scope of the present disclosure.

In an exemplary example, the visual generation engine 210 may be configured to remove the background from the one or more images to extract the product image to make the one or more images amenable for being inpainted in the painted visual. The visual generation engine 210 may be configured to place the product image on the cropped visual and save as a composite visual.

In accordance with an embodiment of the present disclosure, the visual generation engine 210 may be configured to iteratively fine tune at least a portion of the modified visual by altering at least a part of the one or more products or the one or more synthetic scenarios. In particular, the visual generation engine 210 may be configured to fine tune the AI based generation of scenario data (synthetic scenario) and integrate the product data with the scenario data by placing the product image on the cropped visual and save as a composite visual. Further, the visual generation engine 210 may be configured to place all the composite visuals in the inpainted visual according to the one or more coordinates to generate a combined visual (interchangeably referred to as the combined image).

In accordance with an embodiment of the present disclosure, the visual generation engine 210 may be configured to utilize a reinforcement learning agent such that the reinforcement learning agent interacts with the aforementioned processing steps until a visual score meets an expected fidelity of the modified visual during training of the reinforcement learning agent.

Particularly, the visual generation engine 210 utilizes a combination of Generative Adversarial Networks (GANs) and Reinforcement Learning (RL) techniques to continuously improve the realism of output design visuals (i.e., the modified visual). Moreover, the visual generation engine 210 may be configured to utilize the Generative Adversarial Reinforcement Learning (GARL) or Reinforcement Learning in Generative Adversarial Networks (RLGAN) that leverage the strengths of both GANs and RL to achieve more realistic and fine-tuned image generation. Further, GANs provide a strong baseline for generating images, ensuring a certain level of realism. Furthermore, RL may be used to improve the GAN's output by rewarding the GAN when the GAN produces more realistic images. An RL agent may be trained to provide rewards and/or penalties to the generator based on the realism of its output. Furthermore, the RL agent receives feedback from human evaluators and also uses other criteria to assess visual quality. Through RL, the generator learns to produce visuals that not only fool the discriminator but also satisfy additional criteria for realism.

In accordance with an embodiment of the present disclosure, the image generation engine 208 may be configured to continuously train the generator using a combination of GAN training and RL fine-tuning such that over time, the generator became better at producing highly realistic visuals. In particular, the visual generation engine 210 may be configured to adjust the feedback mechanisms and reward structures to adapt to changing requirements and user preferences. Moreover, the visual generation engine 210 may be further configured to monitor the quality of generated visuals over time and assess the realism and quality of the output by generating evaluation metrics, user feedback, or other indicators. Further, combining GANs and RL facilitates the continuous improvement of visual generation, with the generator learning to produce increasingly realistic designs over time in applications like image generation, where realism and quality are critical.

In accordance with an embodiment of the present disclosure, the visual generation engine 210 may be configured to generate visuals with one or more products using available Image Generation models and fine tuning the visual generation model with training dataset. In particular, the visual generation engine 210 may be configured to compare the image provided in the input query with the generated modified visual and fine tune the generated modified visual when a score associated with the generated modified image is less than the minimum score (N). Specifically, the score may be defined as an visual difference and the score may be determined by using below equation:

$$bitwise\_xor\_result = cv2.bitwise\_xor \text{ (the input image, the generated modified visual)}$$

$$N = np.count\_nonzero(bitwise\_xor\_result)$$

In accordance with an embodiment of the present disclosure, the visual generation engine 210 may be configured to fine tune the generated modified visual until the minimum score (N) is less than or equal to a sum of pixels objects identified by the Object Detection Model (such as YOLO, SSD, RetinaNet).

In accordance with an embodiment of the present disclosure, the visual generation engine 210 may be configured to dynamically integrate the modified visual with real-time product data using generative models. In particular, the visual generation engine 210 may be further configured to dynamically fetch the recommended product data from the data store 122 and integrate the modified visual with real-time product data using generative models. Moreover, the visual generation engine 210 may be configured to enable the user to engage in virtual interactions with the modified visual. Further, the visual generation engine 210 may be configured to enable the user to edit and/or change parameters of the modified visual.

In accordance with an embodiment of the present disclosure, the parameters may be, but are not limited to, a color of the modified visual, a size modified visual, an orientation of the product in the modified visual, zoom-in, zoom-out, and the like. Aspects of the present disclosure are intended to include and/or otherwise cover any type of the parameters associated with the modified visuals, without deviating from the scope of the present disclosure.

In accordance with an embodiment of the present disclosure, the visual generation engine 210 may be configured to enable the user to delete, modify, and/or replace the products in the modified visual. Particularly, the products imported on the background and/or the products in the background may be deleted, modified, and/or replaced such that it will not erase the entire previous image that may facilitate the user to not only buy new products, but to replace existing products as well. Further, the parameters may be, but are not limited to, a color of the modified visual, a size modified visual, an orientation of the product in the modified visual, zoom-in, zoom-out, and the like.

In accordance with an embodiment of the present disclosure, the embeddings generation engine 212 may be configured to implement a multimodal embedding model that may utilize multimodal fusion layers to fuse the image and text vectors through additional dense layers to create the multimodal embedding representation. In particular, the multimodal fusion layers may have input layers for the image and text embeddings, hidden layers to learn cross-view interactions and correlations, output layer merging inputs into a joint M-dimensional multimodal embedding. Further, the multimodal fusion layers may be trained end-to-end with the encoders using the paired image-text triplets and loss.

In accordance with an embodiment of the present disclosure, the embeddings generation engine 212 may be configured to generate the multimodal embeddings using a multi-input neural network architecture. In particular, the multi-input neural network architecture may have an image convolutional neural network (CNN) encoder based on the VGG-architecture with 16 convolutional layers and 3 fully connected layers. Batch normalization and dropout regularization with a rate of 0.5 may be applied between layers. Further, the CNN maps images to specific-dimensional embeddings that capture semantic visual features. A text recurrent neural network (RNN) S430 encoder using a bidirectional LSTM architecture with 64 hidden units in each direction. The RNN encodes text sequences into specific-dimensional embeddings capturing semantic meaning. The multimodal fusion layers may be made up of 3 fully connected layers mapping the image and text embeddings to a joint specific-dimensional multimodal embedding space. Furthermore, the network may be optimized using Adam or RMSprop with learning rate scheduling and early stopping. Batch normalization improves stability for fast convergence.

In accordance with an embodiment of the present disclosure, the training of the image encoder and the text encoder may be performed on paired image-text data using loss functions like triplet loss to ensure proper similarity mappings. In particular, the image encoder and the text encoder may be configured to learn individual embedding functions and shared aligned attention layers during training using positive and negative pairs such that all possible modality pairs are formed for loss computation.

In accordance with an embodiment of the present disclosure, the recommendation engine 214 may be configured to implement a multimodal embedding model that may be further configured to generate specific-dimension vectors based on the input (which includes a combination of image data and/or text data). In particular, the multimodal embedding module may utilize convolutional neural networks (CNNs) and recurrent neural networks (RNNs) to encode the images and the text into dense vector representations. Moreover, the embedding vectors can be used for subsequent tasks like image classification and/or content moderation. Further, the recommendation engine 214 may be configured to extract one or more features from raw input (which includes a combination of image data and/or text data) using respective encoders. For example, an image encoder (e.g., a CNN encoder) may be used for the image input and a text encoder (e.g., a sent2vec encoder) may be used.

In accordance with an embodiment of the present disclosure, the image encoder may have a convolutional base for feature extraction followed by pooling and fully connected layers to reduce the activations into a fixed-length vector. Particularly, the image encoder CNN architecture may have convolutional layers with 3x3 kernels, ReLU activations, and He normal initialization for feature extraction, Max pooling layers for spatial dimensionality reduction, flattening layer to reshape 3D feature maps to 1D, fully connected layers with dropout regularization to reduce features and project into embedding space, Output layer with linear activation producing fixed length K-dimensional image embedding vector. Further, the image encoder (CNN) may be trained via back propagation using an image triplet loss function to learn an embedding space where distance correlates to image similarity. Online triplet mining is used to generate hard triplets for effective training. Furthermore, the image encoder (e.g., a CNN encoder) may be trained on the images of one or more products to learn visual features and mappings to the embedding space.

In accordance with an embodiment of the present disclosure, the text encoder may be configured to process sequences of word embeddings with an RNN such as an LSTM or GRU. In particular, the text encoder RNN may have embedding layer to map word tokens to dense vectors, LSTM/GRU recurrent layers to model semantic sequences, attention mechanism to weigh important hidden states, output dense layer to aggregate state outputs into an L-dimensional text embedding vector. Moreover, the text encoder may be trained using a text triplet loss function for the embedding space mapping. Teacher forcing is used for stability during training and the hidden state outputs are aggregated to produce a text vector summarizing the input sequence. Further, the text encoder may be trained on a description of the products to learn textual features and mappings.

Furthermore, the recommendation engine 214 may be configured to convert all input branches to JSON files. Specifically, to convert all input branches to JSON files, the first step is to convert the input modality $m_x$ into a modality-specific vector representation $h_x$, where $x \in \{i; s; a; v; 3d\}$ for image, and text respectively.

In accordance with an embodiment of the present disclosure, the recommendation engine 214 may be configured to resize the images to the desired dimensions while maintaining the aspect ratios of the images prior to converting the input modality $m_x$ into a modality-specific vector representation $h_x$. Further, the resizing of the images may facilitate that the images seamlessly fit into an outdoor imagery, providing a consistent and visually appealing user experience. In an example, $h_i$ and $h_s$ are used for the encoding of the image and sentence modalities.

In accordance with an embodiment of the present disclosure, the recommendation engine 214 may be configured to utilize a pre-trained convolutional neural network (CNN) as an encoder for the images. The encoder may be followed by modality-independent embedding functions, $F_x$ giving modality-specific embeddings $g_x$. $F_x$ may have a series of three fully connected layers with "tan h" activations of size ($1024 \times 512 \times 1408$). The individual embedding functions $g_x$ may be followed by an aligned attention layer that has shared weights for each input modality pair $h_x$. The output of the attention later is the JSON representation for all input modalities $h_x$. Further, the output representation may be a specific-dimensional vector for each input, i.e., $f_i$ and $f_s$ for image and sentence inputs, respectively.

In accordance with an embodiment of the present disclosure, the data store 122 may be configured to store the multimodal product embeddings indexed using Multi-Index Hashing (MIH) for efficient approximate nearest neighbor search. Particularly, hash tables may be constructed using locality-sensitive hashing functions including p-stable LSH and cosine LSH. Moreover, the multimodal product embeddings may be stored in a quantized and compressed format to reduce storage overhead. Further, the product data store uses locality-sensitive hashing (LSH) to index the multimodal embeddings for fast approximate nearest neighbour search. Furthermore, LSH involves using multiple hash functions that map similar vectors to the same buckets with high probability.

In accordance with an embodiment of the present disclosure, the multimodal product embeddings are indexed into hash tables using different hash functions like signed random projections, cosine hashes, and the like. In particular, at search time, the query embedding may be hashed using the same functions to find candidate buckets. The contents may be scanned to retrieve approximate neighbors and ranked by a true distance metric. Moreover, multiple hash tables with different hash functions improve recall at the expense of more memory overhead. Further, the entries are stored and optimized for vector similarity computations using inverted indexes, column vectors, or trees. Updates involve re-hashing and rebuilding impacted indices.

In accordance with an embodiment of the present disclosure, the data store 122 may be a vector database that may serve as a repository storing high-dimensional vector embeddings that encapsulate the semantic features of products in the catalog. Such embeddings enable efficient cross-modal comparisons and retrieval, forming the basis for accurate product recommendations vector database is to provide a superior solution for handling vector embeddings by addressing the limitations of standalone vector indices, such as scalability challenges, cumbersome integration processes, and the absence of real-time updates and built-in security measures, ensuring a more effective and streamlined data management experience.

In accordance with an embodiment of the present disclosure, the search engine 216 may be configured to enable retrieval of the recommendations. Particularly, to retrieve the recommendations, the search engine 216 may be configured to encode the input query into a multimodal embedding vector using the trained neural network technique. Moreover, the search engine 216 may be configured to perform an approximate cosine similarity search on the product data store using Multi-Index Hashing to identify the nearest neighbors within a radius $\varepsilon=0.1$. Further, the search engine 216 may be configured to apply the trained image and text encoders to the input query to generate a multimodal embedding vector.

In accordance with an embodiment of the present disclosure, the multimodal embedding vector may be hashed using the same LSH functions as the index to find approximate matching buckets in the product data store 122. In particular, an exploration algorithm may expand the candidate buckets in best-first order using a priority queue based on the hash distance from the query. Moreover, a direct vector similarity may be computed for each candidate and the top k most similar are returned ranked by distance metric (e.g., cosine similarity). Further, retrieval time may be reduced from linear scan by only computing direct similarity on a small fraction of the database vectors.

In accordance with an embodiment of the present disclosure, the recommendation engine 214 may be configured to refine the raw search rankings using additional techniques to produce the final personalized product recommendations. In particular, the techniques may be, but not limited to, collaborative filtering, category spread constraints, and re-ranking based on user profile and history. Moreover, the recommendation engine 214 may be configured to filter and refine the ranked search results before recommendation. Further, the recommendation engine 214 may be configured to

(i) apply business rules such as, removing unavailable items, applying diversity filters, etc. based on configured policies,
(ii) combine the search rank with collaborative filtering scores for hybrid results by way of statistical rank fusion,
(iii) personalized re-ranking incorporates user profile data, preferences, and purchase history,
(iv) categorical spread and coverage filters maintain variety across different product types,
(v) final top-N products are recommended to the user 608, sorted by adjusted relevance score
(vi) log the user interactions with the modified visuals to train improved multimodal embeddings and relevance models.

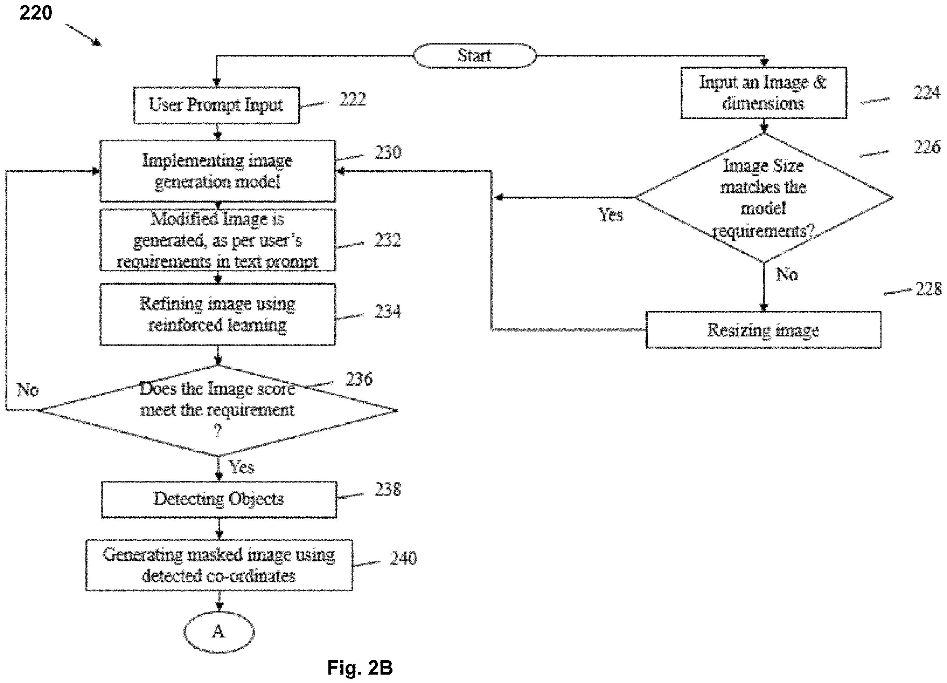

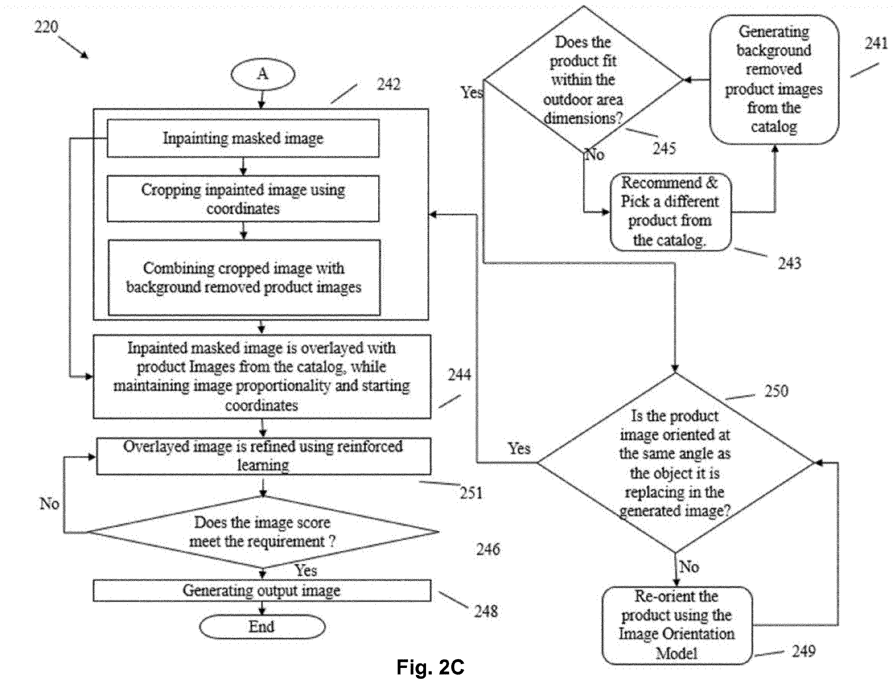

Fig. 2B and Fig. 2C are flowcharts illustrating a method of iterative fine tuning for designing an experience with multi modal input interaction in accordance with one or more embodiments of the present disclosure. The method starts at step 222 and proceeds to step 224-251.

At step 222, the processing circuitry 120 receives a user prompt.

At step 224, the processing circuitry 120 receives an input image and the dimensions of some of the objects in the image such as the wall, patio etc.

At step 226, the processing circuitry 120 determines the size of the input image to. In one embodiment when the processing circuitry 120 determines that the size of the input image is less than Model Image Size Requirements, then method 220 may proceed to step 230. And, in another embodiment when the processing circuitry 120 determines that the size of the input image is greater than Model Image Size Requirements, method 220 may proceed to step 228.

At step 228, the processing circuitry 120 resizes the input image such that the size of the input image is less than Model Image Size Requirements. Once the image is resized, the method 220 proceeds to step 230.

At step 230, the processing circuitry 120 implements the visual generation engine 210 (i.e., an image generation model).

At step 232, the processing circuitry 120, by way of the visual generation engine 210, generates a modified Image, as per the user's requirements given in the text prompt.

At step 234, the processing circuitry 120 may refine the image by way of a reinforcement learning agent.

At step 236, the processing circuitry 120 determines and compares a score associated with the generated image. In one aspect of the present disclosure, when the processing circuitry 120 determines that the image score meets an expected fidelity of the modified visual, the method 220 proceeds to a step 238. On the other hand, when the processing circuitry 120 determines that the score does not meet the expected fidelity of the modified visual, the method 220 may return to step 230.

At step 238, the processing circuitry 120 detects objects in the generated image and extracts coordinates of the objects.

At step 240, the processing circuitry 120 generates a masked image based on the detected coordinates of the objects.

At step 241, the processing circuitry 120 generates background removed product images. In particular, the processing circuitry 120, by way of the visual generation engine 210, generates the background removed product images from the catalog. The visual generation engine 210 removes background from the product images (specifically one or more images of one or more products that matches with the input text provided by the user which describes what are the desired changes on the outdoor image that has been provided as input) by way of one or more background removal tools. Further, the processing circuitry 120, by way of the search engine 216 performs an approximate cosine similarity search on the product data store using Multi-Index Hashing to identify the nearest neighbors within a radius $\varepsilon=0.1$.

After the background is removed from the product image, the API may check the 'dimensionality' to see if the product will fit within the outdoor area dimensions specified as input parameter at step 245. If it does not fit within the specified outdoor area, a new product may be recommended and picked at step 243 and the method goes back to step 241 again with a different product. If the product fits within the outdoor area dimensions specified as input parameter, then the API may check the 'orientation', i.e. if the product image is oriented at the same angle as the object it is replacing in the generated image at step 250, if that is true, the method proceeds to step 242, else the 'Image Reorientation model' is called to change the angular orientation of the product image in step 249.

At step 242, the processing circuitry 120 inpaints the masked image to generate an inpainted image, and further crops the inpainted image using the coordinates from step 238. Further, the processing circuitry 120 may combine the cropped, inpainted, images with 'background removed' product images from the catalog.

At step 244, the processing circuitry 120 overlays the inpainted masked image with 'background removed' product images from the catalog, while maintaining image proportionality and starting coordinates. Further, the processing circuitry 120 by way of the visual generation engine 210, refines the combined image using the reinforcement learning in step 251.

At step 246, the processing circuitry 120 checks the score of the combined fine-tuned image. When the processing circuitry 120 determines that the score meets the requirement, the method 220 proceeds to a step 248. Otherwise, method 220 returns to step 244.

At step 248, the processing circuitry 120 generates and displays the output image.

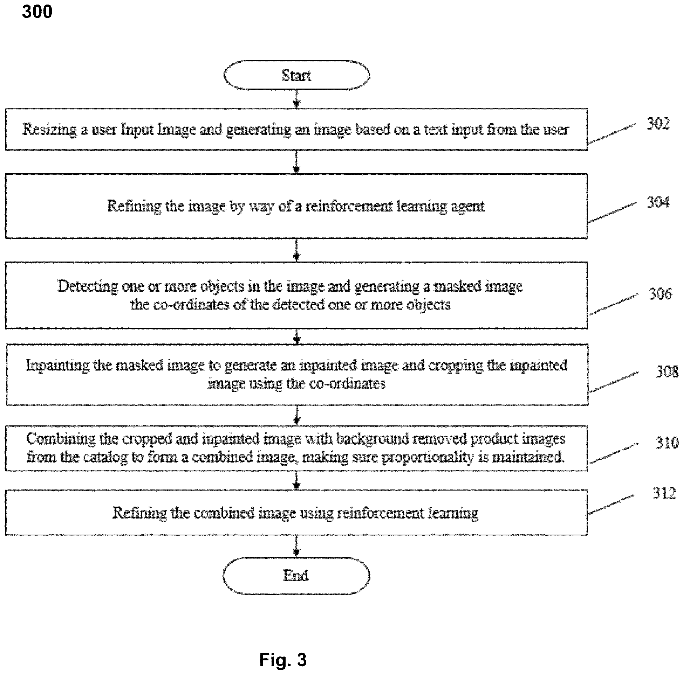

Fig. 3 is a flowchart illustrating a method utilizing a combination of Generative Adversarial Network (GAN) and Reinforcement learning AI technique to continuously make the output design image realistic in accordance with an embodiment of the present disclosure. The output design image (i.e., the modified visuals) may be made realistic by stitching together the combination of inpainted image and the target original constrained image (which has the user's required background and the current view).

The method starts at step 302 and proceeds to step 312.

At step 302, the processing circuitry 120, resizes the User Input Image and utilizes the GAN and generates a modified Image based on Text input from User. In particular, objects are overlaid on the input image based on the text prompt. Moreover, placement location of the objects in the image, their perspective, dimensionality, orientation, proportionality, quantity, and quality of the objects placed in the generated image are dependent on the user's input text prompt.

Example: The text prompt instructing that 5 chairs should be 'placed in a circle' should do exactly that. The output may not have a random number of chairs, placed in random locations within the image.

At step 304, the processing circuitry 120 refines the image by way of a reinforcement learning agent.

At step 306, the processing circuitry 120 detects objects in the generated Image in 302 and generates a masked image for them using their coordinates.

At step 308, the processing circuitry 120 may inpaints the image, and crops the inpainted image using coordinates from step 306.

At step 310, the processing circuitry 120 combines the cropped, inpainted image with 'background removed' product images from the catalog, while making sure proportionality is maintained.

At step 312, the processing circuitry 120 may refine the image using the reinforcement learning.

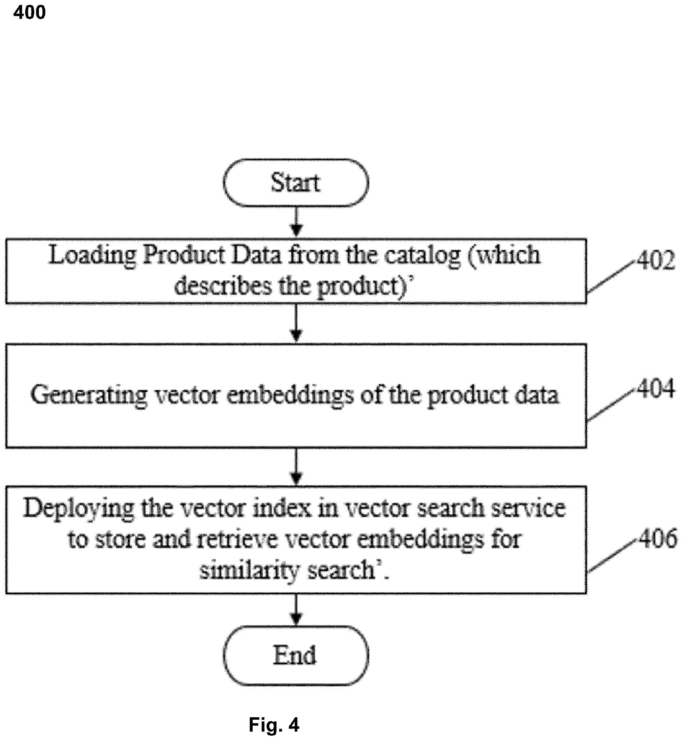

Fig. 4 is a flowchart illustrating a method for data preparation and vector embedding generation in accordance with an embodiment of the present disclosure.

At step 402, product data is loaded from the catalog (which describes the product) which includes columns such as, but not limited to, a product name, an image URL, and a product description, and the like. In particular, the data store 122 may have the product information in a form such that each row includes fields like product name, image, price of product, and product description.

At step 404, the vector embeddings of the product data are generated by using a sentence transformer model. Aspects of the present disclosure are intended to include and/or otherwise cover any type of the sentence transformer model, without deviating from the scope of the present disclosure.

At step 406, the vector index is deployed in the vector search service to store and retrieve vector embeddings for similarity search.

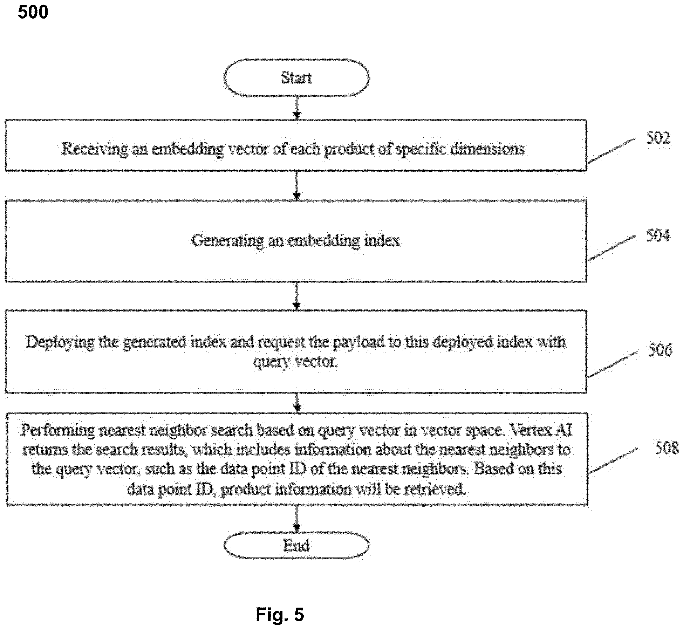

Fig. 5 is a flowchart illustrating a method for creating a vector index with a matching engine in accordance with an embodiment of the present disclosure. The method starts at step 502 and proceeds to step 504-508.

At step 502, an embedding vector of each product (of specific Dimensions) is received.

At step 504, an embedding index is generated using an indexing technique, like Approximate Nearest Neighbors (ANN) and creates an index of the generated embedding vectors.

At step 506, the processing circuitry 120 deploys the generated index and requests the payload to this deployed index with a query vector.

At step 508, the model performs the nearest neighbor search based on the query vector in vector space. In particular, the Vertex AI may return the search results, which includes information about the nearest neighbors to the query vector, such as the data point ID of the nearest neighbors. Based on this data point ID, product information will be retrieved.

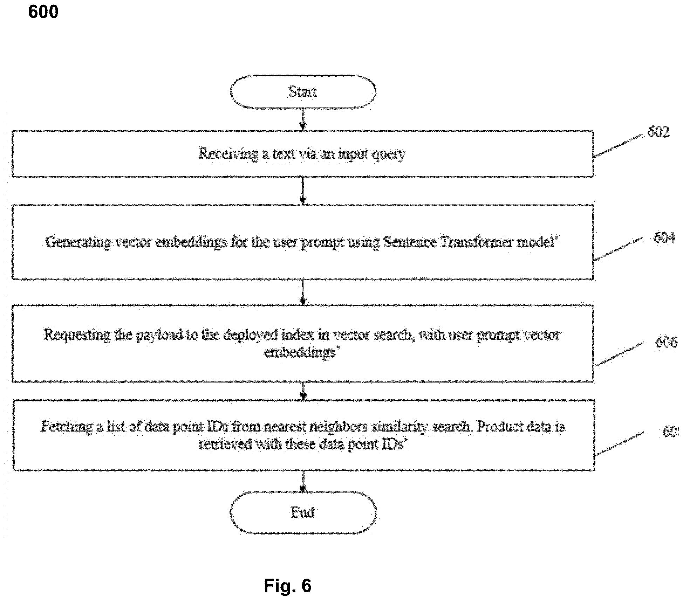

Fig. 6 is a flowchart illustrating a method for recommending products based on text input in accordance with an embodiment of the present disclosure.The method starts at step 602 and proceeds to step 604-608.

At step 602, the processing circuitry 120 receives a text via the user prompt input (e.g., search query, description, related text).

At step 604, the processing circuitry 120 generates vector embeddings for the user prompt using a sentence transformer model.

At step 606, the processing circuitry 120 requests the payload to the deployed index in vector search, with user prompt vector embeddings.

At step 608, the processing circuitry 120 fetches a list of data point IDs from nearest neighbors' similarity search. In particular, the product data may be retrieved with the data point IDs.

Thus, the system 100 and the method 200, 300, 400, 500, 600 provide an integrated technique which leads to a seamless design experience while meeting the requirements of the constraints posed by the user.

In accordance with an embodiment of the present disclosure, the method for transforming a visual comprising: integrating, by way of processing circuitry 120 of an information processing apparatus 106, product data within a context of one or more scenarios to form a modified visual, wherein the integration is based on human feedback-loop interactions. The integrating of the product data within the context of the one or more scenarios further comprising: utilizing generative Artificial Intelligence (AI) techniques to generate, by way of processing circuitry 120, the one or more scenarios, where the one or more scenarios are one or more synthetic scenarios; fusing, by way of processing circuitry 120, the product data within the generated one or more synthetic scenarios to form the modified visual; facilitating, by way of processing circuitry 120, a virtual interaction with the modified visual; and fine-tuning, by way of processing circuitry 120, the modified visual using generative AI techniques.

In accordance with an embodiment of the present disclosure, the method further comprises generating a combined image using the masked inpainted image with the product image with background removed.

In accordance with an embodiment of the present disclosure, the method further comprises generating an output image (i.e., the modified visual) by combining the scenario data and the combined image.

Advantageously, the proposed systems and method solves the problem of machine driven autonomous iterative fine tuning of experience design, with user provided constraints, by seamlessly mashing up (adding noise and reducing noise) and integrating synthetic (generative AI designed new scenarios) along with actual product data catalog multimodal data (text, audio, video & related formats). Moreover, the proposed system and method is a solution that enables the creation of new design experiences through human and machine feedback, autonomously updating and fine-tuning the original design, while allowing product catalog-based searches and mapping based on human feedback or intent, incorporate in-painting and replacement of design elements into previous versions of the design experience. Further, the machine learning based fine tuning and iterative approach is based on multi modal input and it keeps on continuously, precisely, fine tunes and develops an outdoor scenario while incorporating products and materials from a product catalog on an iterative basis, until the user is completely satisfied.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

**Claims**

1. A method (200) for transforming a visual **characterized in that**:
   integrating, by way of processing circuitry (120) of an information processing apparatus (106), product data within a context of one or more scenarios to form a modified visual, where the integration is based on human feedback-loop interactions.

2. The method (200) as claimed in claim 1, wherein the integrating of the product data within the context of the one or more scenarios further comprising:

   utilizing generative Artificial Intelligence (AI) techniques to generate, by way of processing circuitry (120), the one or more scenarios, where the one or more scenarios are one or more synthetic scenarios;
   fusing, by way of processing circuitry (120), the product data within the generated one or more synthetic scenarios to form the modified visual;
   facilitating, by way of processing circuitry (120), a virtual interaction with the modified visual; and
   fine-tuning, by way of processing circuitry (120), the modified visual using generative AI techniques.

3. The method (200) as claimed in claim 1, wherein the integrating of the product data within the context of the one or more scenarios further comprising:

   importing, by way of processing circuitry (120), the one or more scenarios from a data store (122);
   fusing, by way of processing circuitry (120), the product data within the one or more scenarios to form the modified visual;
   facilitating, by way of processing circuitry (120), a virtual interaction with the modified visual; and
   fine-tuning, by way of processing circuitry (120), the modified visual using generative AI techniques.

4. The method (200) as claimed in claim 1, wherein the integrating of the product data within the context of the one or more scenarios further comprising:

   processing, by way of processing circuitry (120), an input query, where the input query comprising one of, a text, the one or more scenarios, product data from one or more product catalogs, unstructured social media and web content, user-generated input using neural network architectures, or a combination thereof;
   transforming, by way of processing circuitry (120), data of the input query using Variational Autoencoders (VAEs) to enhance a spatial arrangement of the products within the one or more scenarios;
   fusing, by way of processing circuitry (120), the product data into the context of the one or more scenarios using generative AI techniques to form the modified visual; and
   dynamically integrating, by way of processing circuitry (120), the modified visual with real-time product data using generative AI techniques.

5. The method (200) as claimed in claim 1, wherein the method (200) further comprising iteratively fine-tuning, by way of processing circuitry (120), at least a portion of the visual by altering at least a part of one of, the one or more products, the one or more synthetic scenarios, or a combination thereof.

6. The method (200) as claimed in claim1, wherein the method (200) further comprises enabling, by way of processing circuitry (120), a user to engage in a virtual interaction with the modified visual.

7. The method (200) as claimed in claim 1, wherein the method (200) further comprises dynamically integrating, by way of processing circuitry (120), the visual with real-time product data.

8. The method (200) as claimed in claim 1, wherein the method (200) further comprises automated and iteratively refining, by way of processing circuitry (120), the modified visual based on generative AI techniques.

9. The method (200) as claimed in claim 1, further comprising collecting the one or more scenarios using one or more sensors (104).

10. The method (200) as claimed in claim, wherein the method (200) further comprises:

    generating masked inpainted images using one or more pinpointed coordinates integrating the text of the input query, the one or more scenarios, and the product data; and
generating a product image with background removed.

11. The method (200) as claimed in claim 10, wherein the method (200) further comprising generating a combined image using the masked inpainted image with the product image with background removed.

12. The method (200) as claimed in claim 11, wherein the method (200) further comprises generating an output image (*i.e.,* the modified visual) by combining the scenario data and the combined image using the pinpointed coordinates used to generate the masked inpainted image.

13. A method (200) for transforming a visual **characterized in that**:
integrating, by way of processing circuitry (120) of an information processing apparatus (106), product data within a context of one or more scenarios to form a modified visual, wherein the integration is based on human feedback-loop interactions; the integrating of the product data within the context of the one or more scenarios further comprising:

utilizing generative Artificial Intelligence (AI) techniques to generate, by way of processing circuitry (120), the one or more scenarios, where the one or more scenarios are one or more synthetic scenarios;
fusing, by way of processing circuitry (120), the product data within the generated one or more synthetic scenarios to form the modified visual;
facilitating, by way of processing circuitry (120), a virtual interaction with the modified visual; and
fine-tuning, by way of processing circuitry (120), the modified visual using generative AI techniques.

14. The method (200) as claimed in claim 13, wherein the method (200) further comprising generating a combined image using the masked inpainted image with the product image with background removed.

15. The method (200) as claimed in claim 13, wherein the method (200) further comprises generating an output image (*i.e.,* the modified visual) by combining the scenario data and the combined image.

**100**

**Fig. 1**

Information Processing Apparatus 106

200 — Network Interface

202 — I/O Interface

Processing Circuitry 134

Visual Generation Engine 210

Embeddings Generation Engine 212

Registration Engine 206

Data Collection Engine 208

Recommendation Engine 214

218

Search Engine 216

204

Data Store 122

EP 4 530 959 A1

**Fig. 2A**

Start

Input an Image & dimensions — 224

Image Size matches the model requirements? — 226

No → Resizing image — 228

Yes

User Prompt Input — 222

Implementing image generation model — 230

Modified Image is generated, as per user's requirements in text prompt — 232

Refining image using reinforced learning — 234

Does the Image score meet the requirement ? — 236

No

Yes → Detecting Objects — 238

Generating masked image using detected co-ordinates — 240

A

220

Fig. 2B

Fig. 2C

**300**

Start

Resizing a user Input Image and generating an image based on a text input from the user — 302

Refining the image by way of a reinforcement learning agent — 304

Detecting one or more objects in the image and generating a masked image the co-ordinates of the detected one or more objects — 306

Inpainting the masked image to generate an inpainted image and cropping the inpainted image using the co-ordinates — 308

Combining the cropped and inpainted image with background removed product images from the catalog to form a combined image, making sure proportionality is maintained. — 310

Refining the combined image using reinforcement learning — 312

End

**Fig. 3**

400

```
           ┌──────────────┐
           │    Start     │
           └──────┬───────┘
                  │
                  ▼
  ┌────────────────────────────────────────┐
  │ Loading Product Data from the catalog   │────402
  │   (which describes the product)'        │
  └────────────────────┬───────────────────┘
                       │
                       ▼
  ┌────────────────────────────────────────┐
  │ Generating vector embeddings of the     │────404
  │            product data                 │
  └────────────────────┬───────────────────┘
                       │
                       ▼
  ┌────────────────────────────────────────┐
  │ Deploying the vector index in vector    │
  │ search service to store and retrieve    │────406
  │   vector embeddings for similarity      │
  │            search'.                     │
  └────────────────────┬───────────────────┘
                       │
                       ▼
              ┌──────────────┐
              │     End      │
              └──────────────┘
```

**Fig. 4**

**500**

Fig. 5

**600**

Start

Receiving a text via an input query — 602

Generating vector embeddings for the user prompt using Sentence Transformer model' — 604

Requesting the payload to the deployed index in vector search, with user prompt vector embeddings' — 606

Fetching a list of data point IDs from nearest neighbors similarity search. Product data is retrieved with these data point IDs' — 60

End

**Fig. 6**

**Europäisches Patentamt**

**European Patent Office**

**Office européen des brevets**

# EUROPEAN SEARCH REPORT

Application Number

EP 24 16 2282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/302681 A1 (TOTTY BRIAN [US] ET AL) 24 September 2020 (2020-09-24) <br> * paragraph [0042] – paragraph [0176] * <br> * figures * | 1-15 | INV. <br> G06Q30/0601 <br> G06N3/045 <br> G06T11/00 <br> G06F40/20 |
| X | FANG FEI ET AL: "A Comprehensive Pipeline for Complex Text-to-Image Synthesis", JOURNAL OF COMPUTER SCIENCE AND TECHNOLOGY, SPRINGER SINGAPORE, SINGAPORE, vol. 35, no. 3, 1 May 2020 (2020-05-01), pages 522-537, XP037160508, ISSN: 1000-9000, DOI: 10.1007/S11390-020-0305-9 [retrieved on 2020-05-29] <br> * abstract * <br> * sections 2-7 * | 1-15 | |
| X | US 2018/374253 A1 (YU HUAFENG [US] ET AL) 27 December 2018 (2018-12-27) <br> * paragraph [0025] – paragraph [0048] * <br> * figures 2-5 * | 1-15 | |
| A | US 10 713 821 B1 (SURYA SHIV [IN] ET AL) 14 July 2020 (2020-07-14) <br> * column 2, line 50 – column 13, line 54 * <br> * figures 1-6 * | 1-15 | TECHNICAL FIELDS SEARCHED (IPC) <br><br> G06Q <br> G06T <br> G06N <br> G06F |
| A | US 2023/081171 A1 (ZHANG HAN [US] ET AL) 16 March 2023 (2023-03-16) <br> * paragraph [0037] – paragraph [0142] * | 1-15 | |
| A | CN 114 399 456 A (SHENGYI SCIENCE AND TECH CO LTD) 26 April 2022 (2022-04-26) <br> * paragraph [0005] – paragraph [0039] * <br> * paragraph [0045] – paragraph [0067] * | 1-15 | |

-/--

The present search report has been drawn up for all claims

| Place of search | Date of completion of the search | Examiner |
|---|---|---|
| The Hague | 22 April 2024 | Rachkov, Vassil |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................
& : member of the same patent family, corresponding document

EPO FORM 1503 03.82 (P04C01)

Europäisches Patentamt

European Patent Office

Office européen des brevets

# EUROPEAN SEARCH REPORT

Application Number

EP 24 16 2282

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NAM WONGYUNG ET AL: "A survey on multimodal bidirectional machine learning translation of image and natural language processing", EXPERT SYSTEMS WITH APPLICATIONS, ELSEVIER, AMSTERDAM, NL, vol. 235, 12 August 2023 (2023-08-12), XP087424998, ISSN: 0957-4174, DOI: 10.1016/J.ESWA.2023.121168 [retrieved on 2023-08-12] * section 6 * | 1-15 | |

TECHNICAL FIELDS
SEARCHED        (IPC)

The present search report has been drawn up for all claims

| Place of search | Date of completion of the search | Examiner |
|---|---|---|
| The Hague | 22 April 2024 | Rachkov, Vassil |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

**EP 24 16 2282**

This annex lists the patent family members relating to the patent documents cited in the above-mentioned European search report.
The members are as contained in the European Patent Office EDP file on
The European Patent Office is in no way liable for these particulars which are merely given for the purpose of information.

**22-04-2024**

| Patent document cited in search report | Publication date | Patent family member(s) | Publication date |
|---|---|---|---|
| US 2020302681 A1 | 24-09-2020 | CA   3134424 A1<br>EP   3948840 A1<br>US 2020302681 A1<br>US 2022319106 A1<br>WO 2020191101 A1 | 24-09-2020<br>09-02-2022<br>24-09-2020<br>06-10-2022<br>24-09-2020 |
| US 2018374253 A1 | 27-12-2018 | US 2018374253 A1<br>US 2020265630 A1 | 27-12-2018<br>20-08-2020 |
| US 10713821 B1 | 14-07-2020 | NONE | |
| US 2023081171 A1 | 16-03-2023 | NONE | |
| CN 114399456 A | 26-04-2022 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311065195
- US 11170569 B
- US 11367250 B